# EUROPEAN PATENT SPECIFICATION

(11) **EP 3 994 433 B1**
(45) Date of publication and mention of the grant of the patent: **07.05.2025**
(21) Application number: 20736623.8
(22) Date of filing: 01.07.2020
(51) Int. Cl.: G01J 5/08, G01J 5/02, G01J 5/00, G01J 5/07, H04N 23/23

(54) **METHOD, SYSTEMS AND SOFTWARE OF PRODUCING A THERMAL IMAGE**
VERFAHREN, SYSTEM UND SOFTWARE ZUR HERSTELLUNG EINES THERMISCHEN BILDES
PROCÉDÉ, SYSTÈME ET LOGICIEL DE PRODUCTION D'UN THERMOGRAMME

(30) Priority: 05.07.2019 SE 1950850
(43) Date of publication of application: 11.05.2022
(73) Proprietor: JonDeTech Sensors AB (publ), 114 28 Stockholm (SE)
(72) Inventor: KVIST, Niklas, 139 36 VÄRMDÖ (SE)
(74) Representative: Noréns Patentbyrå AB
(86) International application number: PCT/EP2020/068461
(87) International publication number: WO 2021/004844

(56) References cited:
- US-A1- 2014 152 772
- US-A1- 2015 204 556
- US-B1- 7 968 845

## Description

### Field of the invention

The current invention relates to systems and methods for gathering and processing information from an IR sensor to produce a thermal image and a method to produce thermal image data.

### Background

Thermographic cameras are known. Most thermographic cameras use a lens to focus IR radiation onto a chip with multiple sensors. Such sensors are expensive and bulky. There is a need for a simple and low-cost thermographic camera.

US Patent No. 7 968 845 describes an imaging device which has a thermal sensor to remotely measure respective temperatures of regions within an imaging field and to generate temperature information signals. A motion tracking system tracks motion of the thermal sensor and generates position information signals representing positions of the thermal sensor during the temperature measurements. An image construction processor uses the position and temperature information signals to generate a two-dimensional image representative of the imaging field including respective temperature indications at different locations within the two-dimensional image, and stores the two-dimensional image within a memory. The two-dimensional image may be used as an output image for display to a user.

US Patent Publication No. 2015/0204556 describes a thermal image sensor including several infrared detector elements that detect infrared light in a detection area, and rotors that scan the detection area in a scanning direction to detect, with the infrared detector elements, infrared light in an area to be captured as a single thermal image. The infrared detector elements include infrared detector elements arranged in mutually different positions in a rotational direction corresponding to the scanning direction of the plurality of infrared detector elements.

US Patent Publication No. 2014/0152772 describes a device for generating thermal images. The device includes a low resolution infrared (IR) sensor supported within a housing and having a field of view. The IR sensor is configured to generate thermal images of objects within the field of view having a first resolution. A spatial information sensor supported within the housing is configured to determine a position for each of the thermal images generated by the IR sensor. A processing unit supported within the housing is configured to receive the thermal images and to combine the thermal images based on the determined positions of the thermal images to produce a combined thermal image having a second resolution that is greater than the first resolution.

### Summary of invention

In a first aspect of the invention, there is provided a method for providing thermal image data according to claim 1. Favourable modifications are defined in the dependent claims.

In particular, the temperature for a pixel in the thermal image data is determined by using the temperature values thus determined.

The design with one sensor provides a cost-efficient way of providing thermal imaging in a low-cost device with a single IR sensor, for example a mobile phone.

In one embodiment it is assumed that the entire temperature difference between two partially overlapping fields is caused by one or both of the non-common fields. In one embodiment it is assumed that the entire temperature difference between two partially overlapping fields is caused by one of the non-common fields.

The field of view may be swept in at least two different sweep directions, resulting in a first temperature value for a non-common field from a first sweep direction and a second temperature value for a non-common field from a second sweep direction and the first and the second temperature values are used to determine the temperature for an area in the image or pixels that represent the area that is shared by both the two non-common fields. Using a plurality of sweep directions increases the resolution of the image. Adding even more sweep directions increases resolution.

The data from the various sweep directions can be used in any suitable manner to determine the temperature of the shared region. In one embodiment the temperature for a area or pixel in the image is determined by averaging the temperatures of the shared region.

The IR sensor may be provided in a handheld device, for example a mobile device such as a mobile phone. The user may be provided with instructions to sweep the device in at least two different directions that are not the direction of detection of the field of view of the IR sensor. The instructions to the user may comprise instruction to move the handheld device in a pre-defined direction, and where the certain direction is updated depending on data from the position and orientation determining means. When the device has a display, the display may be used to display indications that prompts the user to sweep, and also used to display a thermal image created with the use of the thermal image data. The display may be used to display the image as it is formed in real time. This has the advantage that the user is provided with feedback for how to sweep to improve the image in real time.

In a second aspect of the invention there is provided a system comprising an IR sensor with the features of claim 11.

In particular, the temperature for a point in the image is determined by using the temperature values thus determined for non-common fields to which the point belongs.

In a third aspect of the invention there is provided software carrying out a method according to claim 1 when executed on a system according to claim 11.

In particular, temperature for a pixel in the thermal image data is determined by using the temperature values thus determined.

### Brief description of drawings

Fig. 1 is a schematic diagram of a system.
Fig 2 is a schematic diagram of a device.
Fig. 3 is a schematic drawing of a thermal image.
Figs. 4 -7 are schematic images of a device, and fields of view.
Fig. 8 is a flow chart showing a method.
Figs. 9-11 are schematic images of fields of view.
Fig. 12 is a flow chart showing a method.
Figs. 13-14 are schematic drawings of fields of view and areas of interest.
Figs. 15-16 are schematic drawings of devices with displays.
Figs. 17-24 show experimental data.

### Detailed description

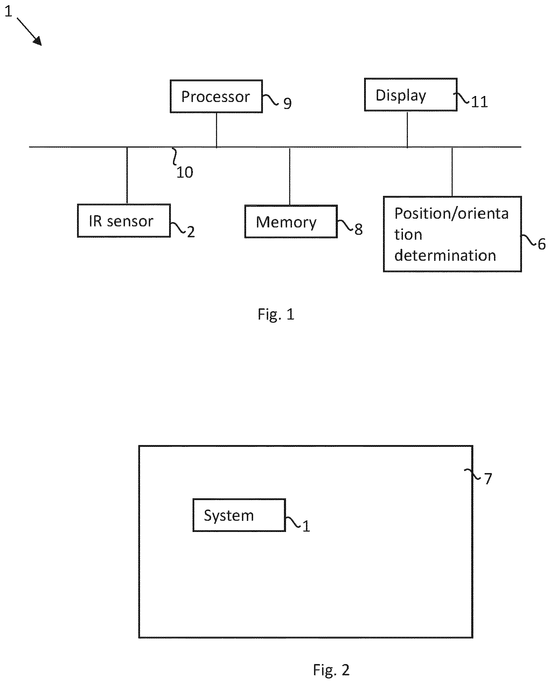

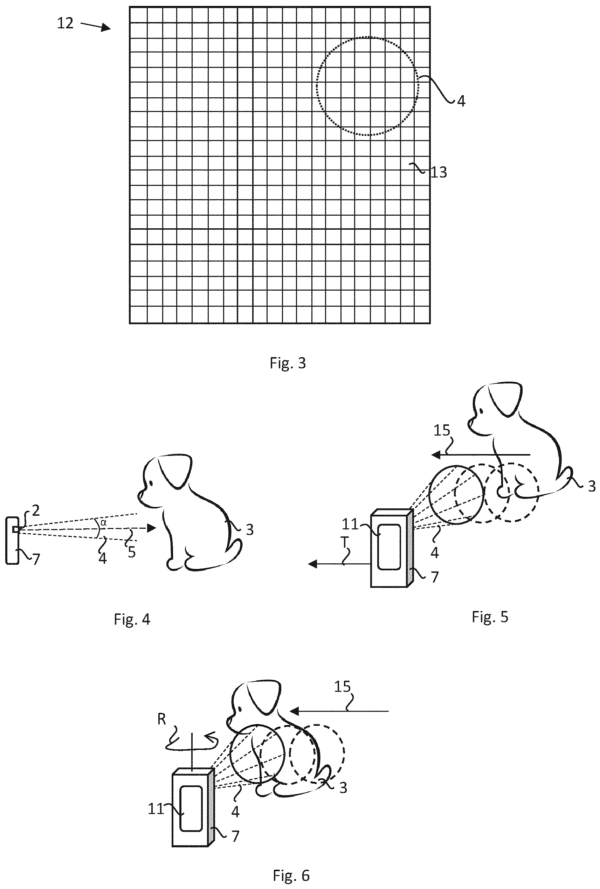

With reference to Figs. 1 to 6, system 1 comprises an IR sensor 2 which is arranged to receive IR radiation in a field of view 4. The field of view 4 has a direction of detection 5. The IR sensor 2 may be any useful type of IR sensor for example a thermopile or a bolometer, where a thermopile is preferred because of the short response time. It is preferred that the IR sensor is of a type that provides absolute temperature values, such as a thermopile. The angle α of the field of view 4 may be from 5° to 120°, where 6° to 45° is more preferred and 7° to 15° is even more preferred. The field of view 4 may have any suitable shape but is preferably circular as shown in Figs. 3, 5-7, 9-11.

The IR sensor 2 is preferably of a type that senses one value, and one value only, at one given moment. The thermal image data is produced by scanning the field of view 4 of the IR sensor 2 across an area of interest 3 and repeatedly gather IR information during scanning, and then compiling and processing the thus gathered information using the position and/or orientation of the IR sensor 2 to produce the image data.

The system 1 also comprises a memory 8, a processor 9, and a communication bus 10. In a preferred embodiment the system 1 comprises a digital display 11 for showing digital images. The digital display 11 may be for example an LCD display. System 1 may comprise any suitable combination of software and hardware. System 1 may for example comprise an operating system and a device for making input such as a touch display.

The memory 8 is used for storing data, such as for example software, for example software carrying out the method and also necessary data such as IR sensor values, positions, orientation, time points, time stamps, overlapping fields and their positions, and image data.

The system 1 also comprises positioning and/or orientation determining means 6 referred to as "position determining means 6" herein, able to determine a position and/or the orientation of the IR sensor 2. Orientation of the IR sensor 2 means the orientation of the direction of detection 5. Preferably, both position and orientation are determined by position determining means 6, but in certain embodiments only position or orientation is determined. Position and orientation are determined at fine resolution, preferably such that a movement of a few millimetres (for translation) or degrees (for orientation) can be detected.

Position and orientation are determined with methods known in the art. Hence, position determining means 6 may comprise any suitable technology including tracking cameras, marker-based or markerless tracking, inertial tracking, digital model building, gyroscopes and accelerometers, which technologies may be combined in any suitable manner. Present models of mobile phones such as iPhone X and Android phones are able to determine position and orientation with a high resolution. Apple iOS provides an API called Core Motion for providing position and orientation data, and Android provides a similar API.

Preferably the IR sensor 2 and positioning determining means 6 are comprised in a device 7, which preferably is a device that can be handheld. The device 7 may be a mobile phone, such as an iPhone or an Android phone. Nevertheless, parts of system 1 may located outside device 7, such as on a server. In particular, memory 8 and processor 9 or parts of or memory 8 and processor 9 may be located on a server which is in digital communication, for example wireless communication, with device 7.

The direction 5 of detection of the field of view 4 is preferably fixed in relation to device 7 The position determining means 6 is able to determine the direction 5 of detection of the field of view 4 and the position of the IR sensor 2. The position and the direction 5 are preferably determined in relation to object in the surroundings such as objects in the area of interest 3. The position and direction may preferably be determined in relation to a stationary object. The direction of detection 5 may be the same as a line of observation perpendicular and directed towards surface of a display 11 on device 7 (see Figs. 5 and 6). A user that holds device 7 with display 11 in the hand will then observe the display 11 in the same direction as the direction of detection 5 of IR sensor 2, which is an advantage during real time display of thermal images (see below).

System 1 may also comprise suitable components for processing the signal from the IR sensor 2 known in the art, such as for example, amplifiers, filters, A/D converters, etc. System 1 is powered by a suitable power source such as for example a battery. The IR signal is provided from the IR sensor 2 to rest of system 1 which may be able to process the signal, store data representing the signal and carry out computations using this data using any suitable combination of software and hardware.

The system 1 is used for production of thermal image data in the form a dot matrix 12 representing a thermal image, an example of which is shown in Fig 3. The dot matrix 12 comprises pixels 13 which makes up the image. The dot matrix image may be a bitmap image. The image data is suitable for rendering a thermal image 12 on a display, for example display 11 of system 1. The image data may be arranged as dot matrix 12 where a temperature value is stored for each pixel 13. The number of pixels in thermal image 12 may be from, for example, 10 000 to several millions.

Each pixel 13 in the dot matrix 12 may assume at least two different colours (for example black and white) but it is preferred that more colours can be shown. Each colour represents a temperature value or a range of temperature values. The colour scheme is selected depending on the application. Typically, a heat image uses the colour scale: black-blue-green-yellow-red, where black indicates the lowest temperature and red indicates the highest temperature. Each colour indicates a certain temperature range. The colours are pseudo-colors and any useful colour scheme may be used. The temperature range for each colour is selected based on the intended use. The display 11 of device 7 may be used for rendering the thermal image based on the dot matrix 12. Hence a pixel 13 may display a colour representing a temperature value.

For generating the image data, the field of view 4 is swept over the area of interest 3, i.e. the area of which a thermal image 12 is to be generated. The direction of sweep is indicated with arrow 15 in the figures. When the device 7 is handheld, sweeping is done manually, by moving the hand. However, powered and/or automatically controlled sweeping may be used in some embodiments, whereby for example a motor controlled by a computer moves the field of view 4. Hence, the system 1 and method described herein may be used as an alternative to multipixel thermal imaging chip sets.

The IR sensor 2 determines the IR value in the field of view 4 with at least a predetermined frequency. For a handheld device, a suitable frequency may be from 1Hz to 100Hz, where 2 Hz to 20 Hz is more preferred.

The position determining means 6 repeatedly determines the position and/or the orientation of the IR sensor 2 with a suitable time interval, which may be simultaneous or with the same frequency as capturing IR data. However, different sampling frequencies may be used. The sampling frequency for position and/or orientation may be at least the frequency for sampling IR data. Time-pairing algorithms may be used to pair the correct IR data with the correct data for position and/or orientation. For example, time stamps may be used. Hence, the position determining means 6 detects the respective current relative position and/or orientation of the IR sensor 2 for each IR value during the course of the field of view 4 is being swept.

Sweeping the direction of field of view 4 may be done by translating the field of view 4, for example by translating the device 7 so that the field of view 4 moves across the area of interest 3 (shown in Fig. 5 where direction of translation is indicated with arrow T), or by changing the direction of detection 5, for example by rotating the device 7 (i.e. turning the device 7 around an axis that is not corresponding to the direction of detection 5, direction of turning is indicated with arrow R) as shown in Fig 6, or combinations of these. In a preferred embodiment, both translation and change of direction are used.

Hence, each IR value detected during scanning becomes associated with data representing position and/ or orientation. The IR image data may be compiled by using temperature values and positioning them in a dot matrix 12 with the use of the position and/or orientation data. The position and/or orientation data obtained by position determining means 6 may be used to position the various captured fields of view in three-dimensional space. As shown in Fig 3, the field of view 4 (or parts of field of view, see below) may assign temperature values to a plurality of pixels 13. Thus, a pixel 13 in the image 12 typically correspond to a smaller area than the field of view 4. More than one pixel 13 may be used to represent the area for which a temperature value has been determined and one pixel may be used to represent more than one area for which the temperature has been determined.

Sampling may be used to map the various areas for which temperature has been determined to pixels 13 of image 12. For example, one or more pixels 13 in image 12 may be used to depict a shared region 21 (see below). Any suitable bitmap digital image file format may be used, including but not limited to, JPEG, TIFF, or GIF. Vector graphics can also be used, although it seems more straightforward to use bitmap/dot matrix file formats.

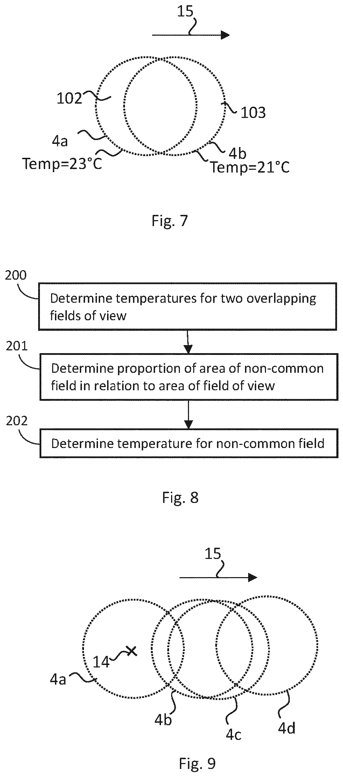

An edembodiment is shown in Figs. 7 to 9. According to the invention, the sampling speed and the sweep speed is such that there are partial overlaps between the fields of view 4a 4b. The two fields of view 4a, 4b are associated with two fields 102 and 103 not common for the two overlapping fields of view 4a, 4b.

In Fig 7, the direction of sweep is again indicated with arrow 15. "Old" non-common field 102 is a part of field of view 4a captured before field of view 4b. "New" non-common field 103 is a part of field of view 4b which is captured after field of view 4a. In various embodiments different assumptions are made regarding what affects any detected change in temperature between area 4a and area 4b. The difference in temperature between the old field of view 4a and the new field of view 4b may be attributed to the old non common area 102 or the new non-common field 103, or both. A temperature value for at least one non-common field 102 103 is determined by using the temperature difference between the two partially overlapping fields of view 4a 4b and the proportion of the area of the non-common field 102 103 in relation to the area of the field of view 4a 4b. The temperature for a pixel 13 in the image 12 is determined by using the temperature values thus determined for at least one non-common field 102 103 to which the pixel 13 belongs.

The proportion of the area of the non-common parts 102 103 in relation to the field of view 4a4b depend on the sampling frequency and the speed with which the sweep is carried out. The sweep speed may be varying, in particular when a handheld device 7 is used. The proportion of area of non-common field 102 103 in relation to the area of the field of view 4 may be determined by a area proportion determining means. The area proportion determining means may use the current sweep speed as determined by position determination means 6. Area proportion determining means is a part of system 1 and is preferably implemented as software that uses information from position determining means 6 and the sampling time points. Hence, area proportion determining means uses information from position determination means 6 to determine the speed with which the field of view 4 moves over the area of interest 3 and can use that information to determine the proportion between the area of a non-common field 102 103 in relation to a field of view 4a 4b. High scanning speed results in large non-common fields 102 103 and slow sweep speed results in small non-common fields. Low sweep speed results in improved resolution of the thermal information. A suitable proportion of the non-common field in relation to the total field of view 4 may be from 1 to 20 %.

In one embodiment sampling frequency of IR sensor and position determining means 6 automatically increases when the sweep speed is high.

The change in temperature between field of view 4a and 4b is divided with the area proportion and the resulting ratio is used to calculate a temperature for the old and/or new non-common field 102 103. In one embodiment it is assumed that the entire temperature difference between overlapping fields 4a, 4b is due to new non-common field 103. In one embodiment it is assumed that the entire temperature difference is due to old non-common field 102. In further embodiments it is assumed that the temperature difference is due to both new non-common field 103 and old non-common field 102, for example in fixed proportions, for example 50% due to new non-common field 102 and 50% due to old non-common field 103.

In the following is an example where it is assumed that the entire change in temperature from field of view 4a to field of view 4b is due to new non-common field 103. Say for example that the temperature of field of view 4a is 23°C and that the temperature of area 4b is 21°C. The difference in temperature (-2°C) will be attributed to non-common fields 102 103. If we assume that the non-common field 103 has a size of 15% of field of view 4b, there will be a change that is -2°C/0.15= -13.3°C, i.e. the temperature value for the new non-common field 103 will be 23-13.3= 9.7°C. Using data from more directions of sweep as described below increases the accuracy.

A method is shown in Fig 8. In step 200, IR sensor data from two overlapping fields of view 4a 4b from the same sweep direction is collected. In step 201 the proportion of the area of the non-common field 102 and 103 to the field of view 4a 4b is determined by area proportion determining means. It is noted that the proportion between non common area 102 and field of view 4a will be the same as the proportion of noncommon area 103 in relation to field of view 4b. Steps 200 and 201 can be carried out in any order. In step 202 the temperature for non-common field 102 or 103, or both, is determined.

The method is preferably applied for a series of overlapping field of views 4a, 4b, 4c, 4d .... as shown in Fig. 9 such that the overlap between 4a and 4b is used, the overlap between 4b and 4c is used, the overlap between 4c and 4d is used, and so on. In this way substantial parts of area of interest 3 may be covered by non-common fields. A starting point 14 may be used for relating the positions and orientations of the different fields of view 4a, b and their non-common fields 102, 103 to each other. The starting point 14 is preferably assigned to the first sampled field of view 4a. The position determining means 6 is be able to build a model of how the field of view 4 moves, and map the IR sensor values in relation to the starting point 14 to create a thermal image 12. The starting point 14 is preferably a point in space defined in relation to the surrounding or the area of interest 3. The starting point 14 is preferably associated with an initial direction of observation 5.

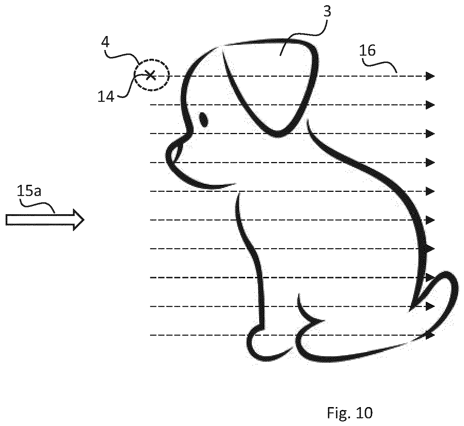

A larger area of interest 3 may be covered by sweeping across the area of interest 3 multiple times, each time with a suitable offset (Fig 10). The offset should preferably at most be the diameter of the field of view 4.

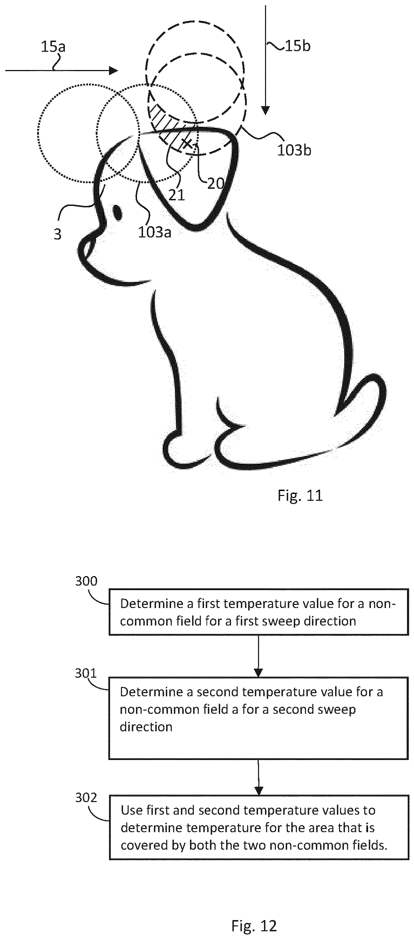

With reference to Figs. 11-12 it is preferred that the field of view 4 is swept across area of interest 3 in at least two different directions 15a, b. For example, the point 20 is covered by new non-common field 103a from the first direction 15a and a new non-common field 103b from the second direction 15b. The temperature for point 20 or area 21 is determined by using the temperature values for the first and new second non-common fields 103a,b as above and then use the temperature values for the point 20 or area 21 from the at least two sweep directions 15a,15b to determine a temperature value for an area in the thermographic image 12, such as a pixel 13 or a number of pixels in the thermographic image 12.

In step 300, the field of view is swept over the area of interest 3 in a first direction 15a, resulting a in a first temperature value for a first new non-common field 103a. This is done using the method above with reference to Figs. 7-10. In step 301 the field of view 4 is swept over the area of interest 3 in a second direction 15b, resulting in a second temperature for a second new old non-common field 103b, in the same manner. In step 303 it is determined that the first and second old non-overlapping fields 103a, b covers the same area to a certain degree, shown as shared region 21. The first and second temperature values are used to determine the temperature for shared region 21 and may be used to determine the temperature value for pixels 13 in shared region 21 of image 12. Shared region 21 (dashed) will have the same temperature value.

The shared region 21 is determined by using the position information stored for each non-common area 103a 103b. The starting position 14 may be used, for example, and all temperature vales may be related in space to starting position 14.

Above it is described how new non-common areas 103a,b are used, but old non-common areas 102a,b may alternatively be used. Both new and old non-common areas may also be used as described above, where, for example any temperature change is divided by old and new areas, for example in a predetermined manner, for example, 50/50.

In preferred embodiments values from three, four, five, six, seven, eight or more sweep directions 15 are used. Hence temperature values for three, four, five, six, seven, eight or more non-overlapping regions 102 103 may be used. Using temperature data from a plurality (such as two or more) sweeping directions increases the resolution of the thermal image 12. The temperature data from the plurality of sweep directions can be used in any suitable manner. In one embodiment the average of the temperature values from the different directions 15ab are used. In one embodiment, where there are more than two sweep directions, the value that is furthest away from the average is used. In one embodiment the extreme value that is closest to the average is used (if the extreme values are 10 and 2 and the average is 5, 2 is chosen). In one embodiment the median value is used.

Thus, for each pixel 13 in the image 12, the temperature value may be the result of using temperature data for a plurality of temperature values, for example the average of the plurality of temperature values.

The directions 15a 15b of sweep of the two datasets is preferably separated with at least 45°. Preferably two directions of sweep are separated by 90°. In a preferred embodiment the field of view 4 is swept in at least four mutually different directions 15, resulting in four different sets of determined IR sensor values. The mutually different directions 15 are preferably separated by 90°. In an even more preferred embodiment eight different directions 15 separated by 45° is used. In one embodiment three different sweep directions 15 separated by 120° is used.

The sweeps are preferably carried out in the same plane or planes that are parallel. The planes are preferably perpendicular to the direction of observation 5 of the field of view 4 at the starting point 14.

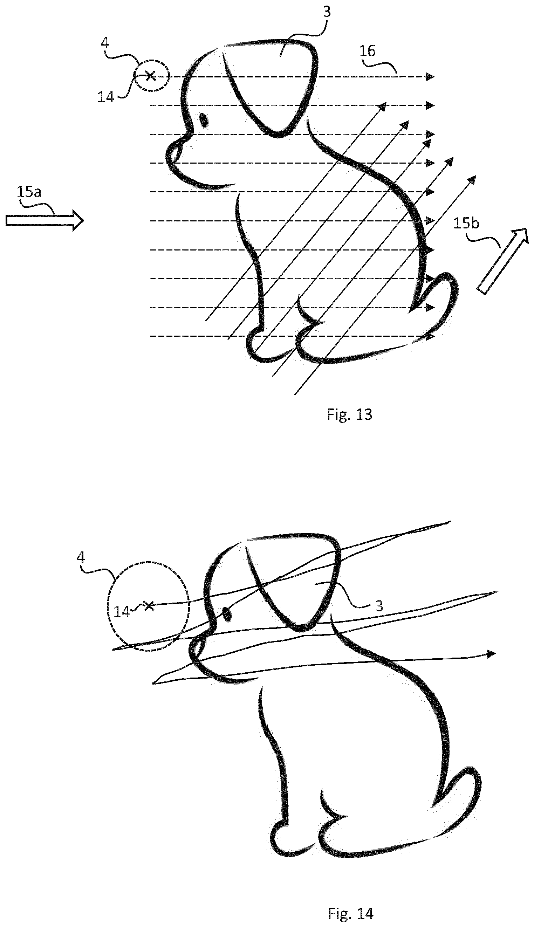

In one embodiment, shown in Fig. 13, the field of view 4 is swept in a first direction 15a several times with perpendicular offsets so that each sweep covers at least partly different areas, and wherein the field of view 4 is additionally swept in the second direction 15b several times with different perpendicular offsets so that each sweep 16 covers at least a partly different area of the area of interest 3. Each arrow 16 indicates the path of the centroid of the projection of the field of view 4 as it covers the area of interest 3.

However, random sweeping may be used as shown in Fig. 14. For example, a user holding device 7 in his or her hand may sweep field of view 4 over area of interest 3 in a criss-cross manner to gather information from several directions. In one embodiment, the image is shown in real time on display 11 providing the user with feedback as the image improves during sweeping. Hence, the user is able to create a thermal image using a "painting"-type motion. This is particularly useful when the image 12 is shown on a display 11 in real time, see below. Then the user can improve the image 12 where needed by sweeping across an area of interest 3 that needs improvement and see the result in real time.

A user may be provided with instructions to sweep in different predefined directions as described above, such as for example, two directions separated by 90°. The instructions may be provided in any manner such as text, symbols, or sound such as synthetic speech.

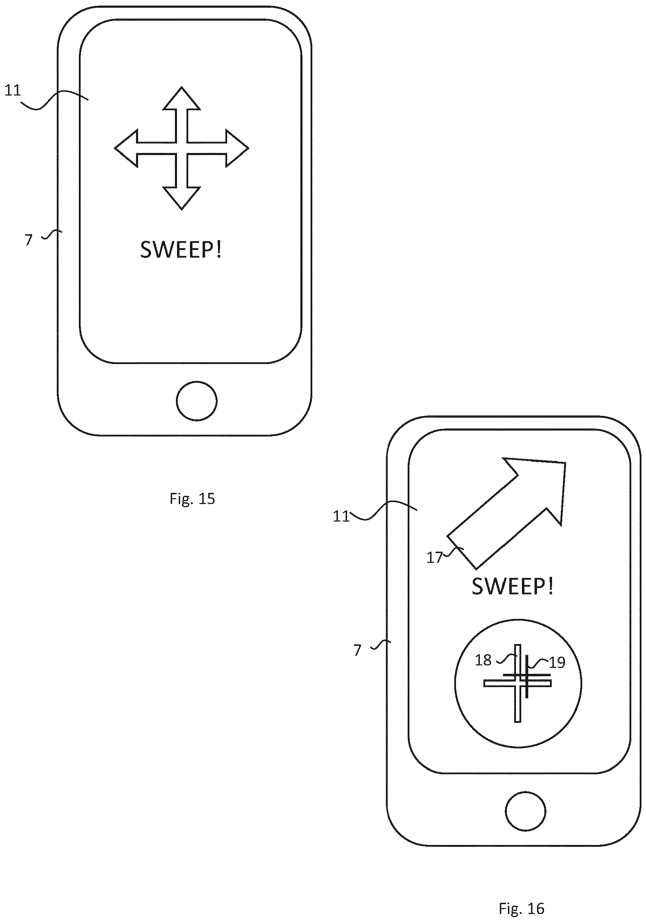

In a preferred embodiment, instructions are provided on display 11. An example is shown in Fig. 15. For example, a handheld device 7 is used by a user and the user is prompted to move the field of view 4, for example by moving the device 7 in different directions 15a 15b. In a preferred embodiment, the device 7 has a display 11 and the display 11 is used to prompt the user. The display 11 can be used to indicate to the user the direction 15 in which the user should sweep the device 7. The display 11 may also provide guidance for orienting the device 7 and hence direction of observation 5 in the correct direction. The prompting may be provided simultaneous as a real time image is shown as described above.

In one embodiment, shown in Fig. 16, instructions to the user is provided in real time using information from position determining means 6. In particular, the user may be prompted to translate or turn the device 7 by translating or turning the field of view 4 order to maintain a predefined sweep direction and orientation. In Fig. 14 the display 11 displays an arrow 17 and a level tool comprising a fixed cross 18 and an orientation dependant cross 19 that moves on the display 11 with the orientation of the device 7, as determined by orientation determination means 6. The user is prompted to keep orientation dependant cross 19 aligned to fixed cross 18. The arrow 17 moves to instruct the user to scan in different directions. Arrow 17 may hence be controlled by position determining means 6 and a predetermined pattern for movement such as for example the pattern of Fig. 13. For example, the user may be prompted to first sweep in a first direction 15a with offsets and then sweep in a second direction 15b, where the directions are separated with angles as described above. The position and orientation at the starting point 14 may be used to provide guidance to the user, where the user is prompted to hold the device 7 in the same orientation or position as at the starting point 14.

The user may also be prompted to sweep in a certain plane, which may be the plane perpendicular to the direction of observation 5 at the starting point 14 or the plane of the display 11 of the device 7 at the starting point 14. Command such as "closer" and "further away" may be used on the display 11 to keep the device 7 in the plane while sweeping.

The user may also be prompted to sweep with a certain speed. As mentioned above, the resolution will be better if the sweep speed is low. Hence the user may be prompted to increase or decrease the sweep speed as the case may be. Feedback may be provided in real time.

In one embodiment, the display 11 of the device 7 is used to display a thermal image 12 using the data for the thermal image processed as above. The method may thus comprise the step of displaying a thermal image 12 of the display 11 of the device 7 that comprises the IR sensor 2. The image 12 may be rendered on the display 11 in real time as the user sweeps across the area of interest 3. Hence, image data may be provided to display 11 for rendering in real time. This provides feedback to the user.

There is also provided imaging software implementing the methods described herein. The imaging software may be provided as an app to be downloaded to a portable device 7 with an IR sensor 2 and position determining means 6. The imaging software is preferably stored on memory 8. The imaging software may be configured to obtain IR sensor values and position and/or orientation data from position determining means 6. For example, the imaging software may repeatedly query one or more sensors, or switch on one or more sensors, and providing a predetermined configuration to one or more sensor. Such configuration may for example be instructions to the IR sensor 2 or position determining means 6 regarding sampling frequencies. The imaging software may be configured to pair IR sensor data with data for position and/or orientation. The imaging software includes the proportion determining means described above.

The imaging software is configured to compile data to produce thermal imaging data to produce a thermal image 12. Hence imaging software is configured to determine non-overlapping fields, and positions and orientation for these, and to compile temperature data from different directions as described herein.

### Example 1

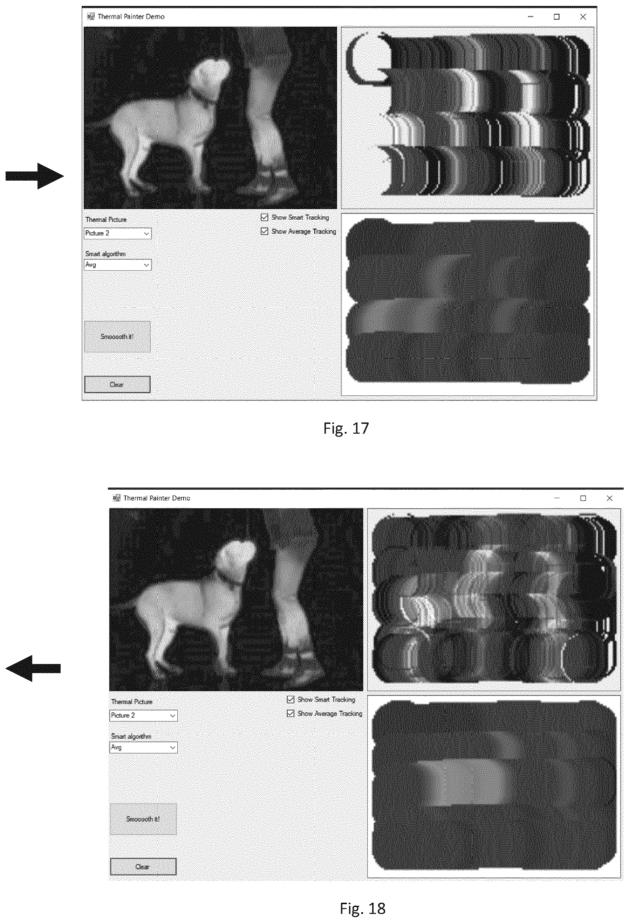

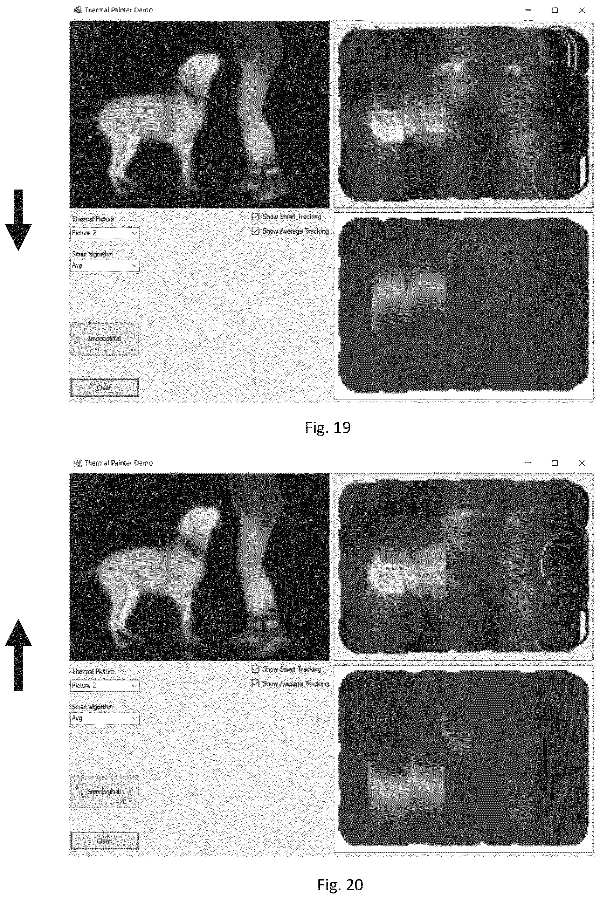

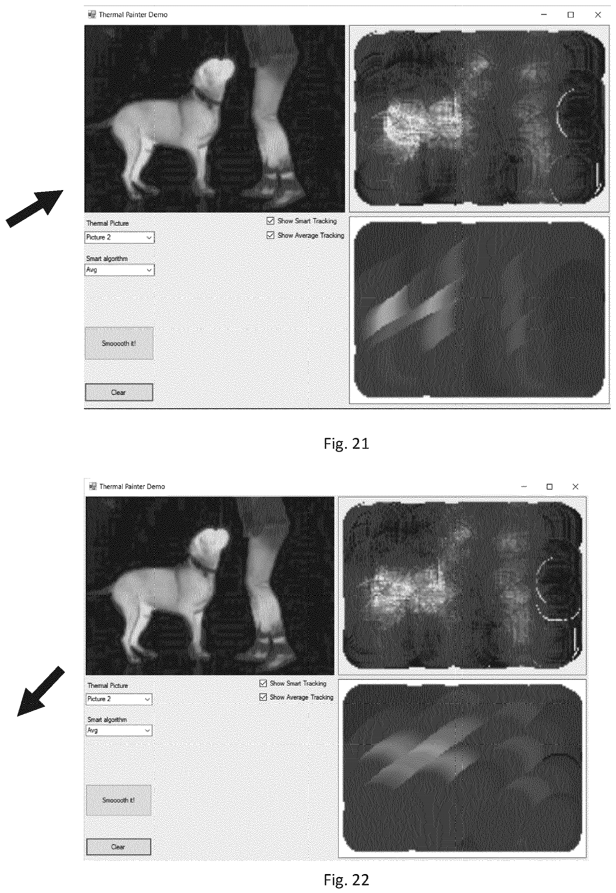

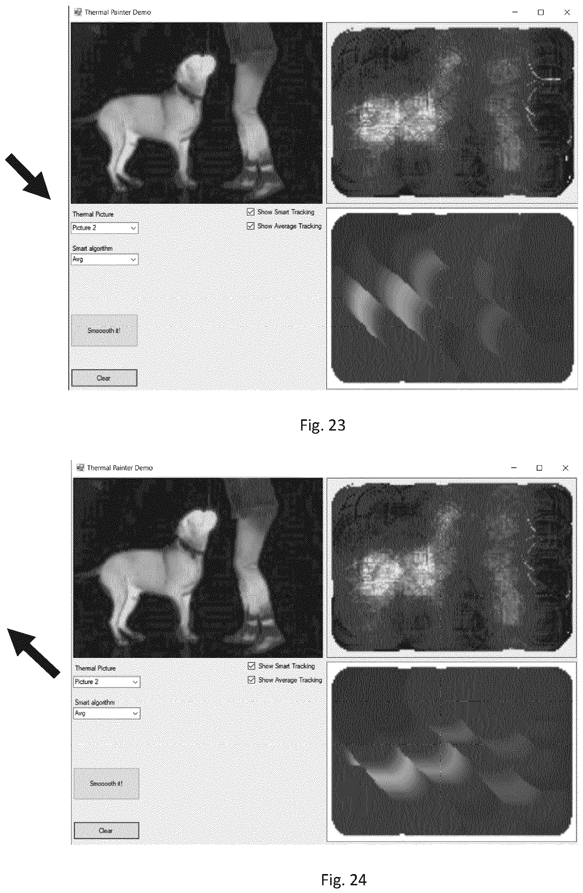

The inventive method was simulated using digital thermal data of an area of interest showing a man and a dog, shown in the upper left panels of Figs. 17 to 24. The data was scanned in eight different directions (indicated with arrows) using a virtual field of view that scanned the digital image data. The position of the virtual field of view was controlled by a user with the use of a computer mouse. Overlapping fields were determined and any difference in temperature between two overlapping fields of view where attributed to the new non-common fields at 100%. Temperature for up to eight non-overlapping fields were averaged for each pixel in the image. The upper right image shows the result of averaging the datasets. It can be seen how the image improves as more and more sweep directions are added. Bottom right is an image that shows the average temperature in the field of view (without using overlaps and different directions) only, which clearly provides inferior resolution.

## Claims

1. A method for providing thermal image (12) data using a device (7) comprising an IR sensor (2) arranged to receive IR radiation from the surroundings in a field of view (4), and position determining means (6) able to determine a position and orientation of the IR sensor (2), the method involving the steps:
a) the IR sensor (2) determining, with at least a predetermined frequency, an IR sensor value corresponding to a temperature of the field of view (4),
b) sweeping the field of view (4) over the area of interest (3) for which the thermal image (12) data is to be produced, where the sweeping is done such that two consecutive IR sensor (2) value determinations have overlapping corresponding fields of view (4),
c) the position determining means (6) determining the respective current relative position and orientation of the device (7) for each determination in step a), during the field of view (4) is being swept,
d) using the determined IR sensor (2) values, together with their respective detected positions and orientations, to determine thermal image (12) data of the area of interest (3),
**characterised in that**
a temperature for an area of the image (12) is determined by determining temperatures for two partially overlapping fields of view (4), such that an overlap between two fields of view (4) are associated with two non-common fields (102,103), which are not common for the two overlapping fields of view (4), and where a temperature value for a non-common field (102, 103) is determined by using the temperature difference between the two partially overlapping fields of view (4) and the proportion of the area of the non-common field (102, 103) in relation to the area of the field of view (4).

2. The method of claim 1 where it is assumed that the entire temperature difference between two partially overlapping fields (4) is caused by one or both of the non-common fields (102, 103).

3. The method of claim 1 or 2 where it is assumed that the entire temperature difference between two partially overlapping fields (4) is caused by one of the non-common fields (102, 103).

4. The method of any one of claims 1 to 3 where the field of view (4) is swept over the area of interest (3) in at least two different sweep directions, resulting in a first temperature value for a non-common field (102, 103) from a first sweep direction and a second temperature value for a non-common field (102, 103)from a second sweep direction and the first and the second temperature values are used to determine the temperature for an area in the image (12) that represent the area that is shared by both the two non-common fields (102, 103).

5. The method of claim 4 where the temperature for an area in the image (12) is determined by averaging the temperatures of the shared region (21).

6. The method of any one of claims 1 to 5 where the IR sensor (2) is comprised in a handheld device (7).

7. The method of claim 6 where a user is provided with instructions to sweep the device (7) in at least two different directions that are not the direction of detection (5) of the field of view (4) of the IR sensor (2).

8. The method of claim 7 where the instructions to the user comprises instruction to move the device (7) in a pre-defined direction, and where the indication is updated depending on data from the position and orientation determining means (6).

9. The method of any one of claims 7 to 8 where the device (7) has a display (11) and where the display (11) is used to display indications that prompts the user to sweep, and used to display a thermal image (12) created with the use of the thermal image data.

10. The method of any of claims 1 to 9 where the device (7) has a display (11) and where the display (11) is used to display the image (12) as it is formed in real time.

11. A system (1) comprising an IR sensor (2) arranged to receive IR radiation from the surroundings in a field of view (4), and positioning determining means (6) able to determine a position and orientation of the IR sensor (2), the system (1) arranged to provide thermal image (12) data, where the system (1) is configured to cause the IR sensor (2) to determine a IR sensor value corresponding to a temperature of the field of view (4) with at least a predetermined frequency, where the predetermined frequency is such that two consecutive IR sensor value determinations have overlapping corresponding fields of view (4) when the field of view is swept over an area of interest (3), and further configured to determine the current relative position and orientation of the IR sensor (2) for the time point for which the IR sensor values are determined, and further configured to use the determined IR sensor values, together with their respective detected positions and orientations, to determine data for a thermal image (12), **characterised in that**
the temperature for an area in the image (12) is determined by determining temperatures for two partially overlapping fields of view (4), such that an overlap between two fields of view (4) are associated with two non-common fields (102,103), which are not common for the two overlapping fields of view (4),
and where a temperature value for a non-common field (102, 103) is determined by using the temperature difference between the two partially overlapping fields of view (4) and the proportion of the area of the non-common field (102, 103) in relation to the area of the field of view (4).

12. Software carrying out a method according to claim 1 when executed on a system according to claim 11, the software being arranged to repeatedly obtain IR sensor values from an IR sensor (2), where each IR sensor value corresponds to a temperature of a field of view and where the IR sensor values are determined with a predetermined frequency such that two consecutive IR values have overlapping corresponding fields of view (4) when the field of view (4) is swept over an area of interest (3), and further arranged to repeatedly obtain, from positioning determining means (6), the position and orientation of the IR sensor (2), the software further being configured to use the IR sensor values, together with their respective detected positions and orientations, to determine a thermal image (12) of an area,
**characterised in that**
a temperature for an area in the image (12) is determined by determining temperatures for two partially overlapping fields of view (4), such that an overlap between two fields of view (4) are associated with non-common fields (102,103), which are not common for the two overlapping fields of view, and where a temperature value for a non-common field (102, 103) is determined by using the temperature difference between the two partially overlapping fields of view (4) and the proportion of the area of the non-common field (102, 103) in relation to the area of the field of view (4), and where the temperature value for an area in the thermal image (12) data is determined by using the temperature values thus determined

## Patentansprüche

1. Verfahren zur Bereitstellung von Wärmebilddaten (12) unter Verwendung einer Vorrichtung (7), umfassend einen IR-Sensor (2), der so angeordnet ist, dass er IR-Strahlung aus der Umgebung in einem Sichtfeld (4) empfängt, und Positionsbestimmungsmittel (6), die in der Lage sind, eine Orientierung und Ausrichtung des IR-Sensors (2) zu bestimmen, wobei das Verfahren die folgenden Schritte umfasst:
a) der IR-Sensor (2) ermittelt mit mindestens einer vorgegebenen Frequenz einen IR-Sensorwert, der einer Temperatur des Sichtfelds (4) entspricht,
b) Abtasten des Sichtfeldes (4) über den interessierenden Bereich (3), für den die Wärmebilddaten (12) erzeugt werden sollen, wobei das Abtasten so erfolgt, dass zwei aufeinanderfolgende IR-Sensor(2)-Wertbestimmungen sich überlappende entsprechende Sichtfelder (4) aufweisen,
c) das Positionsbestimmungsmittel (6) die jeweilige aktuelle relative Position und Orientierung der Vorrichtung (7) für jede Bestimmung in Schritt a) bestimmt, während das Sichtfeld (4) abgetastet wird,
d) Verwendung der ermittelten Werte des IR-Sensors (2) zusammen mit ihren jeweiligen erfassten Orientierungen und Ausrichtungen, um Wärmebilddaten (12) des interessierenden Bereichs (3) zu bestimmen,
**dadurch gekennzeichnet, dass**
eine Temperatur für einen Bereich des Bildes (12) bestimmt wird, indem Temperaturen für zwei sich teilweise überlappende Sichtfelder (4) bestimmt werden, sodass eine Überlappung zwischen zwei Sichtfeldern (4) mit zwei nicht gemeinsamen Feldern (102, 103) zugeordnet ist, die für die beiden überlappenden Sichtfelder (4) nicht gemeinsam sind, und wobei ein Temperaturwert für ein nicht gemeinsames Feld (102, 103) bestimmt wird, indem die Temperaturdifferenz zwischen den beiden teilweise überlappenden Sichtfeldern (4) und der Anteil des Bereichs des nicht gemeinsamen Feldes (102, 103) im Verhältnis zum Bereich des Sichtfeldes (4) verwendet wird.

2. Verfahren nach Anspruch 1, wobei davon ausgegangen wird, dass der gesamte Temperaturunterschied zwischen zwei sich teilweise überlappenden Feldern (4) durch eines oder beide der nicht gemeinsamen Felder (102, 103) verursacht wird.

3. Verfahren nach Anspruch 1 oder 2, wobei angenommen wird, dass die gesamte Temperaturdifferenz zwischen zwei sich teilweise überlappenden Feldern (4) durch eines der nicht gemeinsamen Felder (102, 103) verursacht wird.

4. Verfahren nach einem der Ansprüche 1 bis 3, wobei das Sichtfeld (4) über den interessierenden Bereich (3) in mindestens zwei verschiedenen Abtastrichtungen abgetastet wird, was zu einem ersten Temperaturwert für ein nicht gemeinsames Feld (102, 103) aus einer ersten Abtastrichtung und einem zweiten Temperaturwert für ein nicht gemeinsames Feld (102, 103) aus einer zweiten Abtastrichtung führt, und der erste und der zweite Temperaturwert verwendet werden, um die Temperatur für einen Bereich im Bild (12) zu bestimmen, der den Bereich darstellt, der von den beiden nicht gemeinsamen Feldern (102, 103) gemeinsam genutzt wird.

5. Verfahren nach Anspruch 4, wobei die Temperatur für einen Bereich im Bild (12) durch Mittelwertbildung der Temperaturen des gemeinsamen Bereichs (21) bestimmt wird.

6. Verfahren nach einem der Ansprüche 1 bis 5, wobei der IR-Sensor (2) in einer Handvorrichtung (7) enthalten ist.

7. Verfahren nach Anspruch 6, bei dem ein Benutzer die Anweisung erhält, das Gerät (7) in mindestens zwei verschiedenen Richtungen abzutasten, die nicht die Erfassungsrichtung (5) des Sichtfeldes (4) des IR-Sensors (2) sind.

8. Verfahren nach Anspruch 7, bei dem die Anweisungen an den Benutzer die Anweisung umfassen, die Vorrichtung (7) in eine vordefinierte Richtung zu bewegen, und wobei die Anzeige in Abhängigkeit von den Daten der Positions- und Orientierungsbestimmungsmittel (6) aktualisiert wird.

9. Verfahren nach einem der Ansprüche 7 bis 8, wobei die Vorrichtung (7) ein Display (11) aufweist und das Display (11) zur Anzeige von Angaben verwendet wird, die den Benutzer zum abtasten auffordern, und zur Anzeige eines Wärmebildes (12), das unter Verwendung der Wärmebilddaten erstellt wurde.

10. Verfahren nach einem der Ansprüche 1 bis 9, wobei die Vorrichtung (7) ein Display (11) aufweist und das Display (11) zur Anzeige des Bildes (12) verwendet wird, während es in Echtzeit erzeugt wird.

11. System (1) mit einem IR-Sensor (2), der so angeordnet ist, dass er IR-Strahlung aus der Umgebung in einem Sichtfeld (4) empfängt, und einem Positionsbestimmungsmittel (6), die in der Lage ist, eine Position und Orientierung des IR-Sensors (2) zu bestimmen, wobei das System (1) so angeordnet ist, dass es Wärmebilddaten (12) bereitstellt, wobei das System (1) so konfiguriert ist, dass es den IR-Sensor (2) veranlasst, einen IR-Sensorwert, der einer Temperatur des Sichtfeldes (4) entspricht, mit mindestens einer vorgegebenen Frequenz zu bestimmen, wobei die vorbestimmte Frequenz derart ist, dass zwei aufeinanderfolgende IR-Sensorwert-Bestimmungen überlappende entsprechende Sichtfelder (4) haben, wenn das Sichtfeld über einen interessierenden Bereich (3) abgetastet wird, und ferner konfiguriert ist, um die aktuelle relative Position und Orientierung des IR-Sensors (2) für den Zeitpunkt zu bestimmen, für den die IR-Sensorwerte bestimmt werden, und ferner konfiguriert ist, um die bestimmten IR-Sensorwerte zusammen mit ihren jeweiligen erfassten Positionen und Orientierungen zu verwenden, um Daten für ein Wärmebild (12) zu bestimmen, **dadurch gekennzeichnet, dass**
die Temperatur für einen Bereich in dem Bild (12) bestimmt wird, indem Temperaturen für zwei sich teilweise überlappende Sichtfelder (4) bestimmt werden, so dass eine Überlappung zwischen zwei Sichtfeldern (4) zwei nicht gemeinsamen Feldern (102, 103) zugeordnet ist, die für die beiden sich überlappenden Sichtfelder (4) nicht gemeinsam sind, und wobei ein Temperaturwert für ein nicht gemeinsames Feld (102, 103) bestimmt wird, indem die Temperaturdifferenz zwischen den beiden sich teilweise überlappenden Sichtfeldern (4) und der Anteil des Bereichs des nicht gemeinsamen Feldes (102, 103) im Verhältnis zum Bereich des Sichtfeldes (4) verwendet wird.

12. Software, die ein Verfahren nach Anspruch 1 ausführt, wenn sie auf einem System nach Anspruch 11 ausgeführt wird, wobei die Software so eingerichtet ist, dass sie wiederholt IR-Sensorwerte von einem IR-Sensor (2) erhält, wobei jeder IR-Sensorwert einer Temperatur eines Sichtfeldes entspricht und wobei die IR-Sensorwerte mit einer vorbestimmten Frequenz bestimmt werden, sodass zwei aufeinanderfolgende IR-Werte überlappende entsprechende Sichtfelder (4) haben, wenn das Sichtfeld (4) über einen interessierenden Bereich (3) abgetastet wird, und ferner so eingerichtet ist, dass sie von Positionsbestimmungsmittel (6) wiederholt die Position und Orientierung des IR-Sensors (2) erhält, wobei die Software ferner so konfiguriert ist, dass sie die IR-Sensorwerte zusammen mit ihren jeweiligen erfassten Positionen und Orientierungen verwendet, um ein Wärmebild (12) eines Bereichs zu bestimmen,
**dadurch gekennzeichnet, dass**
eine Temperatur für einen Bereich im Bild (12) bestimmt wird, indem Temperaturen für zwei sich teilweise überlappende Sichtfelder (4) bestimmt werden, sodass eine Überlappung zwischen zwei Sichtfeldern (4) mit nicht gemeinsamen Feldern (102, 103) zugeordnet ist, die für die zwei sich überlappenden Sichtfelder (4) nicht gemeinsam sind, und wobei ein Temperaturwert für ein nicht gemeinsames Feld (102, 103) unter Verwendung der Temperaturdifferenz zwischen den beiden sich teilweise überlappenden Sichtfeldern (4) und des Anteils des Bereichs des nicht gemeinsamen Feldes (102, 103) im Verhältnis zum Bereichs des Sichtfeldes (4) bestimmt wird, und wobei der Temperaturwert für einen Bereich in den Wärmebilddaten (12) unter Verwendung der so bestimmten Temperaturwerte bestimmt wird.

## Revendications

1. Procédé pour fournir des données de thermogramme (12) au moyen d'un dispositif (7) comprenant un capteur IR (2) agencé pour recevoir un rayonnement IR des alentours dans un champ de vue (4), et des moyens de détermination de position (6) pouvant déterminer une position et orientation du capteur IR (2), le procédé impliquant les étapes :
a) le capteur IR (2) déterminant, avec au moins une fréquence prédéterminée, une valeur de capteur IR correspondant à une température du champ de vue (4),
b) le balayage du champ de vue (4) au-dessus de la zone d'intérêt (3) pour laquelle les données de thermogramme (12) doivent être produites, dans lequel le balayage est réalisé de telle sorte que deux déterminations de valeur de capteur IR (2) consécutives présentent des champs de vue (4) correspondants se chevauchant,
c) les moyens de détermination de position (6) déterminant la position et orientation relative actuelle respective du dispositif (7) pour chaque détermination dans l'étape a), pendant que le champ de vue (4) est en train d'être balayé,
d) l'utilisation des valeurs de capteur IR (2) déterminées, conjointement avec leurs positions et orientations détectées respectives, pour déterminer les données de thermogramme (12) de la zone d'intérêt (3),
**caractérisé en ce que**
une température pour une zone de l'image (12) est déterminée par détermination des températures pour deux champs de vue (4) se chevauchant partiellement, de telle sorte qu'un chevauchement entre deux champs de vue (4) est associé à deux champs non communs (102, 103), qui ne sont pas communs pour les deux champs de vue (4) se chevauchant, et dans lequel une valeur de température pour un champ non commun (102, 103) est déterminée au moyen de la différence de température entre les deux champs de vue (4) se chevauchant partiellement et la proportion de la zone du champ non commun (102, 103) par rapport à la zone du champ de vue (4).

2. Procédé selon la revendication 1 dans lequel il est supposé que la différence de température toute entière entre deux champs (4) se chevauchant partiellement est provoquée par un des ou les deux champs non communs (102, 103).

3. Procédé selon la revendication 1 ou 2 dans lequel il est supposé que la différence de température toute entière entre deux champs (4) se chevauchant partiellement est provoquée par un des champs non communs (102, 103).

4. Procédé selon l'une quelconque des revendications 1 à 3 dans lequel le champ de vue (4) est balayé au-dessus de la zone d'intérêt (3) dans au moins deux directions de balayage différentes, entraînant une première valeur de température pour un champ non commun (102, 103) à partir d'une première direction de balayage et une deuxième valeur de température pour un champ non commun (102, 103) à partir d'une deuxième direction de balayage et la première et la deuxième valeurs de température sont utilisées pour déterminer la température pour une zone dans l'image (12) qui représente la zone qui est partagée par les deux champs non communs (102, 103) à la fois.

5. Procédé selon la revendication 4 dans lequel la température pour une zone dans l'image (12) est déterminée par calcul de la moyenne des températures de la région (21) partagée.

6. Procédé selon l'une quelconque des revendications 1 à 5 dans lequel le capteur IR (2) est compris dans un dispositif (7) portatif.

7. Procédé selon la revendication 6 dans lequel un utilisateur reçoit des instructions pour balayer le dispositif (7) dans au moins deux directions différentes qui ne sont pas la direction de détection (5) du champ de vue (4) du capteur IR (2).

8. Procédé selon la revendication 7 dans lequel les instructions à l'utilisateur comprennent une instruction pour déplacer le dispositif (7) dans une direction prédéfinie, et dans lequel l'indication est mise à jour en fonction des données provenant des moyens de détermination de position et d'orientation (6).

9. Procédé selon l'une quelconque des revendications 7 à 8 dans lequel le dispositif (7) présente un écran (11) et dans lequel l'écran (11) est utilisé pour afficher des indications qui invitent l'utilisateur à effectuer un balayage, et utilisé pour afficher un thermogramme (12) créé au moyen des données de thermogramme.

10. Procédé selon l'une quelconque des revendications 1 à 9 dans lequel le dispositif (7) présente un écran (11) et dans lequel l'écran (11) est utilisé pour afficher l'image (12) à mesure qu'elle est formée en temps réel.

11. Système (1) comprenant un capteur IR (2) agencé pour recevoir un rayonnement IR des alentours dans un champ de vue (4), et des moyens de détermination de positionnement (6) pouvant déterminer une position et orientation du capteur IR (2), le système (1) étant agencé pour fournir des données de thermogramme (12), dans lequel le système (1) est configuré pour amener le capteur IR (2) à déterminer une valeur de capteur IR correspondant à une température du champ de vue (4) avec au moins une fréquence prédéterminée, dans lequel la fréquence prédéterminée est telle que deux déterminations de valeur de capteur IR consécutives présentent des champs de vue (4) correspondants se chevauchant lorsque le champ de vue est balayé au-dessus d'une zone d'intérêt (3), et configuré en outre pour déterminer la position et orientation relatives actuelles du capteur IR (2) pour le moment pour lequel les valeurs de capteur IR sont déterminées, et configuré en outre pour utiliser les valeurs de capteur IR déterminées, conjointement avec leurs positions et orientations détectées respectives, pour déterminer des données pour un thermogramme (12), **caractérisé en ce que**
la température pour une zone dans l'image (12) est déterminée par détermination des températures pour deux champs de vue (4) se chevauchant partiellement, de telle sorte qu'un chevauchement entre deux champs de vue (4) sont associés à deux champs non communs (102, 103), qui ne sont pas communs pour les deux champs de vue (4) se chevauchant,
et dans lequel une valeur de température pour un champ non commun (102, 103) est déterminée au moyen de la différence de température entre les deux champs de vue (4) se chevauchant partiellement et la proportion de la zone du champ non commun (102, 103) par rapport à la zone du champ de vue (4).

12. Logiciel mettant en œuvre un procédé selon la revendication 1 lorsqu'il est exécuté sur un système selon la revendication 11, le logiciel étant agencé pour obtenir à plusieurs reprises des valeurs de capteur IR d'un capteur IR (2), dans lequel chaque valeur de capteur IR correspond à une température d'un champ de vue et dans lequel les valeurs de capteur IR sont déterminées avec une fréquence prédéterminée de telle sorte que deux valeurs IR consécutives présentent des champs de vue (4) correspondants se chevauchant lorsque le champ de vue (4) est balayé au-dessus d'une zone d'intérêt (3), et agencé en outre pour obtenir à plusieurs reprises, de moyens de détermination de positionnement (6), la position et orientation du capteur IR (2), le logiciel étant en outre configuré pour utiliser les valeurs de capteur IR, conjointement avec leurs positions et orientations détectées respectives, pour déterminer un thermogramme (12) d'une zone,
**caractérisé en ce que**
une température pour une zone dans l'image (12) est déterminée par détermination des températures pour deux champs de vue (4) se chevauchant partiellement, de telle sorte qu'un chevauchement entre deux champs de vue (4) est associé à des champs non communs (102, 103), qui ne sont pas communs pour les deux champs de vue se chevauchant et dans lequel une valeur de température pour un champ non commun (102, 103) est déterminée au moyen de la différence de température entre les deux champs de vue (4) se chevauchant partiellement et de la proportion de la zone du champ non commun (102, 103) par rapport à la zone du champ de vue (4), et dans lequel la valeur de température pour une zone dans les données de thermogramme (12) est déterminée au moyen des valeurs de température ainsi déterminées.
